# EUROPEAN PATENT SPECIFICATION

(11) **EP 1 332 672 B1**
(45) Date of publication and mention of the grant of the patent: **26.07.2006**
(21) Application number: 03394005.7
(22) Date of filing: 08.01.2003
(51) Int. Cl.: A01K 89/01

(54) **Reel unit for spinning reel**
Spuleneinheit für Angelwinde
Unité de bobines pour moulinet de pêche

(30) Priority: 05.02.2002 JP 2002028219
(43) Date of publication of application: 06.08.2003
(73) Proprietor: SHIMANO INC., Sakai-shi, Osaka 590-8577 (JP)
(72) Inventor: Kitajima, Keigo, Sakai-shi, Osaka 590-8577 (JP)
(74) Representative: Murnane, Graham John

(56) References cited:
- EP-A- 0 803 191
- PATENT ABSTRACTS OF JAPAN vol. 2002, no. 04, 4 August 2002 (2002-08-04) & JP 2001 333669 A (SHIMANO INC), 4 December 2001 (2001-12-04)

## Description

### 1. Field of the Invention

This invention generally relates to reel units. More specifically, the present invention relates to reel units for spinning reels mounted to a fishing rod that winds fishing line onto its spool with a rotor that rotates in cooperation with rotation of a handle.

### 2. Background Information

Generally, spinning reels have a reel unit, a rotor rotatably supported by the reel unit, and a spool that is arranged in front of the rotor and on the outer periphery of which fishing line is wound by the rotor. The reel unit has a handle for rotating the rotor.

A reel unit generally has a casing and a mounting leg portion that are formed unitarily from an injection-molded synthetic resin or die-cast aluminum, and a cover portion. The casing accommodates a drive portion and has an opening for mounting the drive portion. The mounting leg portion has a leg portion extending upward from the casing and a fishing rod-mounting portion extending frontward and rearward from the tip of the leg portion. The cover portion is provided for covering the opening of the casing. The rotor is supported rotatably by the casing and is driven to rotate by a drive mechanism provided therein. The spool is supported by the casing so that it can shift back and forth, and an oscillating mechanism is provided therein to shift the spool back and forth. The rotation shaft of the handle is supported rotatably by the casing and the cover portion.

This type of spinning reel is required to be lightweight and be formed with a high degree of precision. As far as the casing is concerned, reduced weight and a high degree precision can be achieved when the wall thickness is reduced to reduce sink marks during the molding. However, the mounting leg portion needs to have a large wall thickness to maintain the relative strength. In the conventional configuration, however, the casing and the mounting leg portion are formed unitarily, and therefore, the casing is stretched by the thick-walled mounting leg portion during the molding. As a result, variation in thickness is caused in the thin-walled casing if the wall thickness of the casing is reduced to attain weight reduction and increased precision. For this reason, molding strain or non-uniform contraction is caused in the casing, which needs to be formed with a high degree of precision, and consequently, it is difficult to maintain a high degree of precision. If the wall thickness of the mounting leg portion is reduced in order to avoid this problem, the relative strength of the mounting leg portion is reduced and the mounting leg portion might be easily damaged. If the mounting leg portion is provided separately from the casing, the joint portion between the mounting leg portion and the casing needs to have large strength, necessitating a complex structure in the joint portion.

To address these issues, a reel unit for a spinning reel having a lid portion in which the cover portion and the mounting leg portion are formed unitarily is disclosed in EP-A-0803181 (Japanese Unexamined Patent Publication No. 10-004836). By providing the casing separately, it is possible to reduce the wall thickness of the casing and maintain a high degree of precision. Moreover, by forming the mounting leg portion unitarily with the cover portion, which does not need to be formed with so high a degree of precision, it is possible to reduce the wall thickness of the mounting leg portion and to maintain the relative strength of the mounting leg portion.

In the conventional configuration, the lid portion formed unitarily with the mounting leg portion is made of metal, which has a high relative strength, to maintain a high degree of precision and relative strength. However, with a lid portion made of metal, if reduction in weight is desired while maintaining a high degree of precision and relative strength, it is necessary to use expensive metals such as titanium or the like, increasing the manufacturing cost.

In view of the above, there exists a need for reel unit for spinning reel which overcomes the above mentioned problems in the prior art. This invention addresses this need in the prior art as well as other needs, which will become apparent to those skilled in the art from this disclosure.

### SUMMARY OF THE INVENTION

A purpose of the present invention is to provide a reel unit for a spinning reel having a lid portion in which a cover portion and a mounting leg portion are formed unitarily, in which the weight of the lid portion is reduced at low cost while maintaining a high degree of precision and relative strength.

A reel unit for a spinning reel according to the first aspect of the invention is a reel unit for a spinning reel, which is mounted to a fishing rod and is for winding fishing line onto a spool by a rotor that rotates in cooperation with rotation of a handle. The reel unit comprises a casing, a lid portion, and a wall portion. The casing includes an opening formed at its side, a mechanism accommodating space formed therein, and a rotation support portion for supporting a rotation shaft of the rotor, the rotation support portion formed so as to be arranged inside a circular hollow formed at the reel unit side of the rotor. The lid portion has a cover portion and a mounting leg portion, the cover portion detachably fixed to the casing, covering the opening of the casing, and formed unitarily with a wall portion formed at its side to which the rotor is mounted so that a space is formed inside, and the mounting leg portion extending from the cover portion and having a front end to which the fishing rod can be attached.

In this reel unit, the cover portion is formed unitarily with the mounting leg portion for mounting a fishing rod, and the wall portion is formed at the side of the cover portion to which the rotor is mounted that is formed so as to cover the opening. Thus, in the cover portion, the wall portion is formed unitarily at the side to which the rotor is mounted in addition to the portion covering the opening, and consequently, the entire cover portion has a box-like shape enclosing a space therein. Therefore, stress is distributed and the relative strength of the cover portion is increased. Moreover, because stress is distributed, deformations do not occur easily during the molding and a high degree of precision can be maintained. Accordingly, even if the lid portion including the cover portion is made of a synthetic resin or an aluminum alloy, which has a low relative strength, it is possible to maintain a high degree of precision and relative strength. Furthermore, if the lid portion including the cover portion is made of an aluminum alloy or a synthetic resin, the weight of the lid portion can be reduced at low cost.

According to the second aspect of the invention in the reel unit for a spinning reel as set forth in the first aspect, a circular flange portion having a first flange portion and a second flange portion, the first flange portion arranged on substantially the same plane as the end face of the hollow and provided at the casing, and the second flange portion provided at the wall portion such that the first and second flange portions cover the hollow. In this case, the flange portion can prevent foreign matter such as water or liquids from entering the hollow.

According to the third aspect of the invention, in the reel unit for a spinning reel as set forth in the second aspect, the second flange portion is formed unitarily the wall portion. In this case, since the second flange portion and the wall portion are formed unitarily, it is possible to increase the relative strength of the cover portion by providing the second flange portion.

Alternatively, the second flange portion can be provided separately from the wall portion. In this case, washing and lubricating the inside of the hollow of the rotor can be carried out easily since only the second flange portion needs to be detached.

According to the fourth aspect of the invention, in the reel unit for a spinning reel as set forth in any one of second through third aspects, the first flange portion is formed unitarily with the casing. In this case, because the casing and the first flange portion are formed unitarily, the relative strength of the casing is high.

Alternatively, the first flange portion can be provided separately from the casing. In this case, washing and lubricating the inside of the hollow of the rotor can be easily carried out since only the first flange portion needs to be detached.

According to the fifth aspect of the invention, in the reel unit for a spinning reel as set forth in any one of the first through fourth aspects, the casing and the lid portion are made of a synthetic resin. In this case, the weight of the lid portion can be reduced while a high degree of precision and strength are maintained, and at the same time, the cost of the casing can be reduced since the casing is made of a synthetic resin. Alternatively, the casing and the lid portion can be made of a light weight metal such as aluminum alloy.

According to the seventh aspect of the invention, in the reel unit for a spinning reel as set forth in any one of the first through sixth aspects, the cover portion has a trimmed portion formed continuously with the second flange portion and formed on the circumference facing the opening. In this case, the relative strength is further increased with the trimmed portion.

According to the eighth aspect of the invention, in the reel unit for a spinning reel as set forth in any one of first through seventh aspects, the lid portion has a handle support portion for supporting the handle. In this case, the need for providing a protrusion for supporting a shaft is eliminated since the cover portion only needs to serve the function of mere covering. As a result, thickness variation in the cover portion is small, and the lid portion can be easily manufactured.

According the ninth aspect of the invention, in the reel unit for a spinning reel as set forth in any one of the first through ninth aspects, the casing has a handle support portion for supporting the handle. In this case, the handle support portion is formed unitarily with the mounting leg portion, which requires strength, and therefore, the weight and the wall thickness of the casing can be reduced while a high degree of precision is maintained. In addition, since the handle is supported by the lid portion and the casing, the handle can be mounted from either the left or the right side of the reel unit.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side view of a spinning reel according to a first embodiment of the present invention;
Figure 2 is a cross-sectional side view of the spinning reel according to a first embodiment of the present invention;
Figure 3 is a rear view of the spinning reel according to a first embodiment of the present invention;
Figure 4 is an exploded oblique view of a reel unit according to a first embodiment of the present invention;
Figure 5 is an oblique view of the casing according to a first embodiment of the present invention;
Figure 6 is a side view of the lid portion according to a first embodiment of the present invention;
Figure 7 is a cross-sectional view of the lid portion viewed along line VII-VII of Figure 6;
Figure 8 is a cross-sectional side view of a spinning reel in accordance with a second embodiment; and
Figure 9 is a plan view of a spinning reel in accordance with a second embodiment with a portion of the spinning reel removed.

### DETAILED DESCRIPTION OF THE PREFERRED EMBODIMENTS

Selected embodiments of the present invention will now be explained with reference to the drawings. It will be apparent to those skilled in the art from this disclosure that the following description of the embodiments of the present invention is provided for illustration only, and not for the purpose of limiting the invention as defined by the appended claims and their equivalents.

### First Embodiment

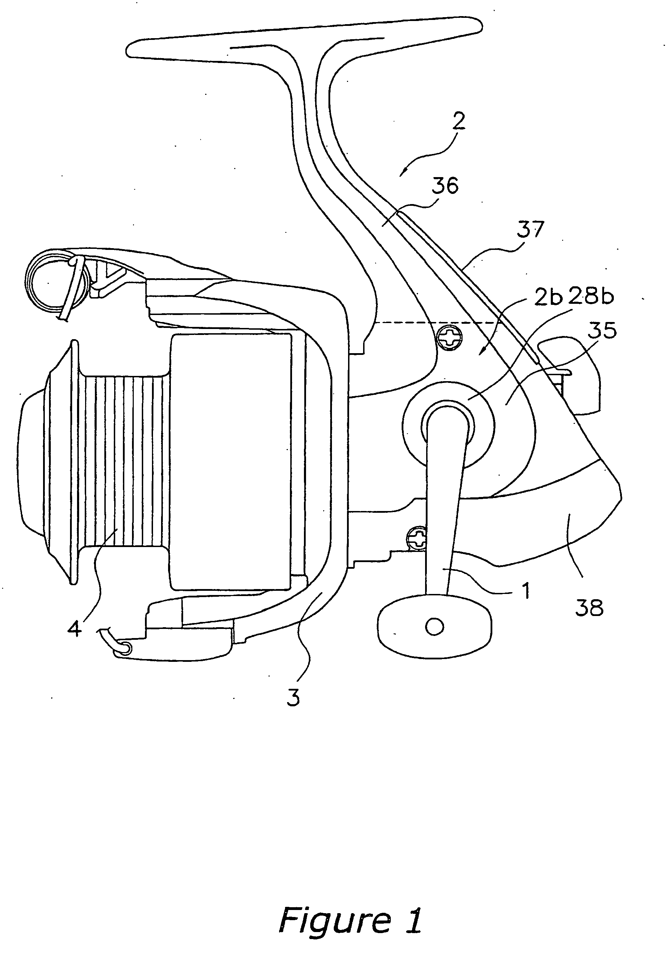

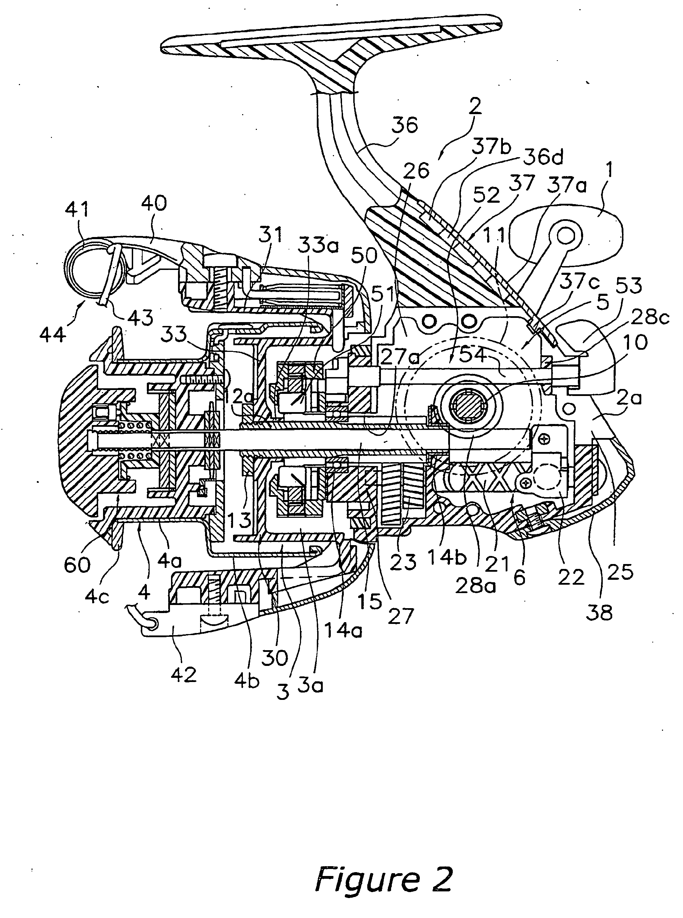

As shown in Figures 1 and 2, a spinning reel in accordance with a first embodiment of the present invention includes a handle 1, a reel unit 2 rotatably supporting the handle 1 and mounted to a fishing rod, a rotor 3, and a spool 4. The rotor 3 is for winding the fishing line around the spool 4, and is rotatably supported at the front of the reel unit 2. The fishing line is wound around the outer peripheral surface of the spool 4, which is disposed at the front of the rotor 3 and can be shifted back and forth. It should be noted that the handle 1 can be attached to the left side of the reel unit 2 as shown in Figure 1, or to the right side of the reel unit 2 as shown in Figure 2.

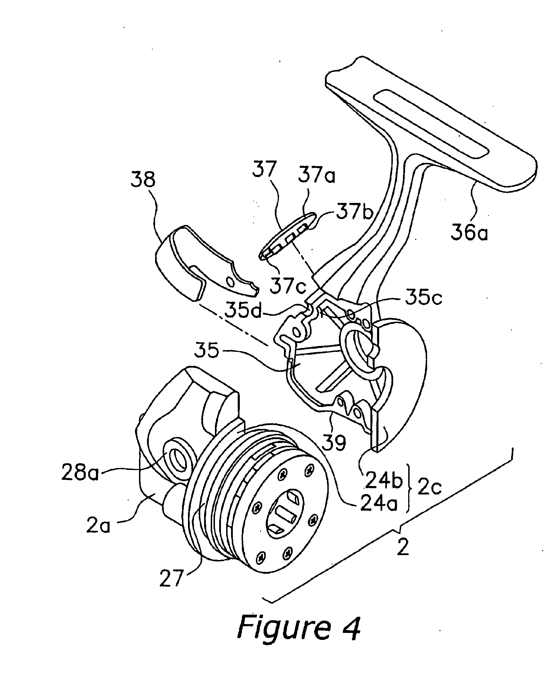

The reel unit 2 principally includes, as shown in Figures 1 through 5, a casing 2a for supporting the rotor 3 and the spool 4, a lid portion 2b detachably screwed to the casing 2a, a circular flange portion 2c having a first and a second flange portions 24a and 24b respectively formed unitarily with the casing 2a and the lid portion 2b.

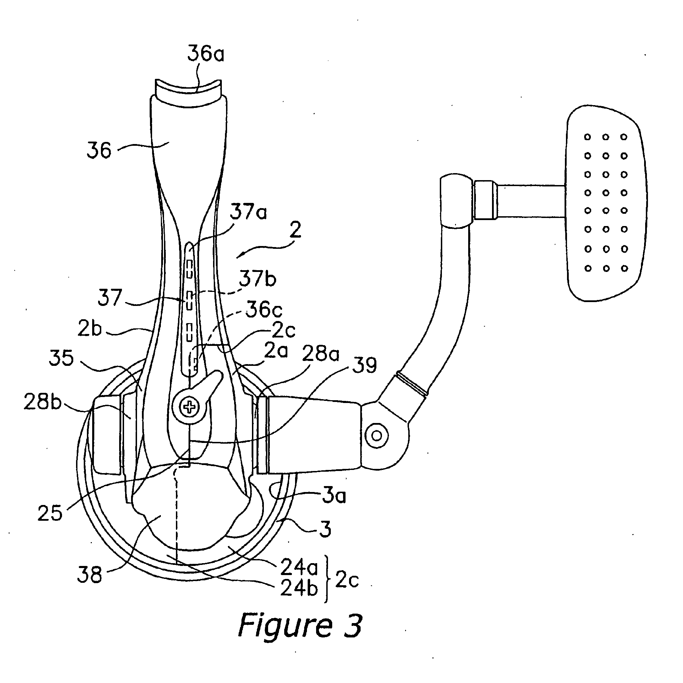

The casing 2a is, for example, made of a polyamide-based synthetic resin reinforced by glass fibers, and is produced by injection molding. As shown in Figures 3 to 5, the casing 2a has an opening 25 formed at its side, a mechanism accommodating space 26 formed inside, a rotation support portion 27 and a first handle support portion 28a. The rotation support portion 27 is formed so as to be arranged inside the circular hollow 3a formed at the reel unit 2 side of the rotor 3, and is for rotatably supporting the rotation shaft (later-described pinion gear 12) of the rotor 3. The first handle support portion 28a comprises a boss portion for supporting one end of the handle shaft 10 that is the rotation shaft of the handle 1. The upper portion (the portion near the mounting side of a fishing rod) of the casing 2a has about the same thickness as an adjacent portion of a cover member 35, but the lower portion bulges towards the lid portion 2b and is formed with a thickness greater than that of the upper portion.

The openings 25 are provided in three portions except in the front portion, namely, the upper, the lower, and the rear portions, to mount various mechanisms in the mechanism accommodating space 26. The openings 25 are formed with a step downward of the mid portion thereof according to the change in the thickness of the casing 2a. As shown in Figure 2, the mechanism accommodating space 26 accommodates a rotor driving mechanism 5 for rotating the rotor 3, and an oscillation mechanism 6 for winding up the fishing line uniformly by shifting the spool 4 back and forth. The rotation support portion 27 is formed unitarily with the front portion of the first semi-circular flange portion 24a that is also formed unitarily into a substantially columnar shape in front of the mechanism accommodating space 26, and it has a through hole 27a (Figure 2) through the center of which the pinion gear 12 passes. A one-way clutch 51 of the later-described reverse rotation prevention mechanism 50 is screwed fast on the front face of the rotation support portion 27.

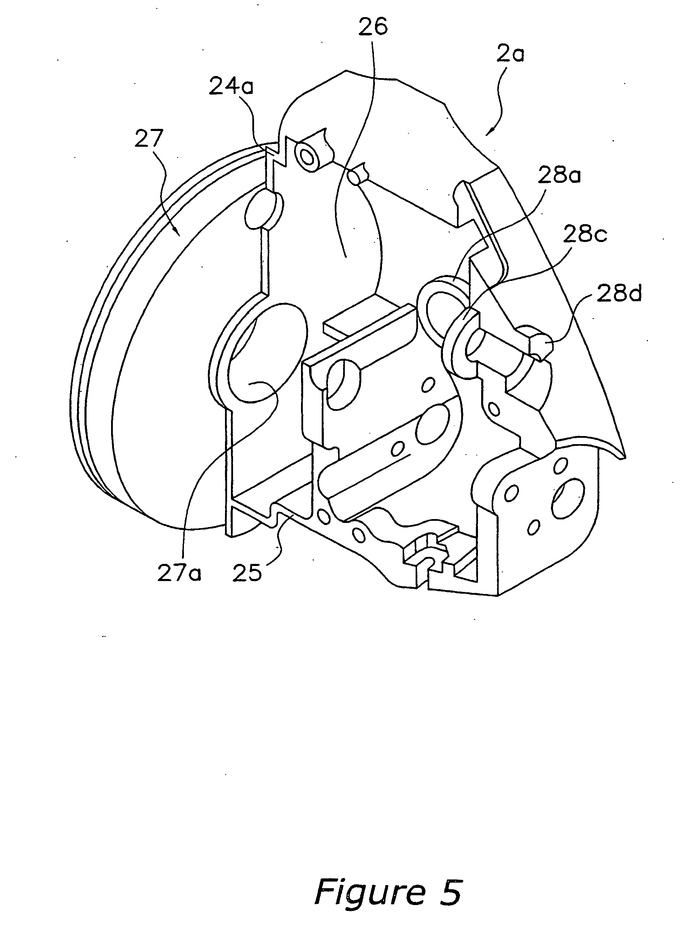

At the rear of the casing 2a, as shown in Figures 2 and 5, a pivot support portion 28c is formed to support an operation shaft 54 of an operation mechanism 52 of the reverse rotation prevention mechanism 50. The pivot support portion 28c is formed in a semi-circular shape protruding toward the lid portion 2b. The length of the pivot support portion 28c with respect to the direction of the operation shaft 54 is made shorter than in conventional configurations. The pivot support portion 28c is arranged in a space 35c formed inside of a trimmed portion 39 of the lid portion 2b. Therefore, it is sufficient if the lid portion 2b side has only a small semi-circular notch 35d for directly accommodating the operation shaft 54 instead of the pivot support portion 28c, so the relative strength of the notched portion of the lid portion 2b is maintained high. At the rear of the casing 2a, a protruding quarter-circle boss portion 28d is formed contacting an operation lever 53. The lid portion 2b is also provided with a boss portion 35e having a similar shape. The two boss portions 28d and 35e together form a substantially semi-circular boss portion.

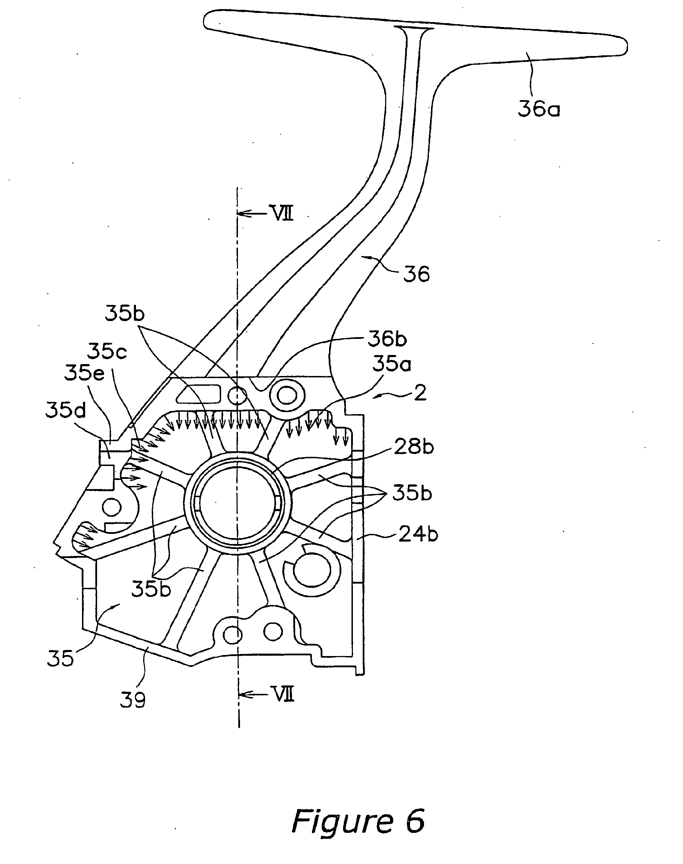

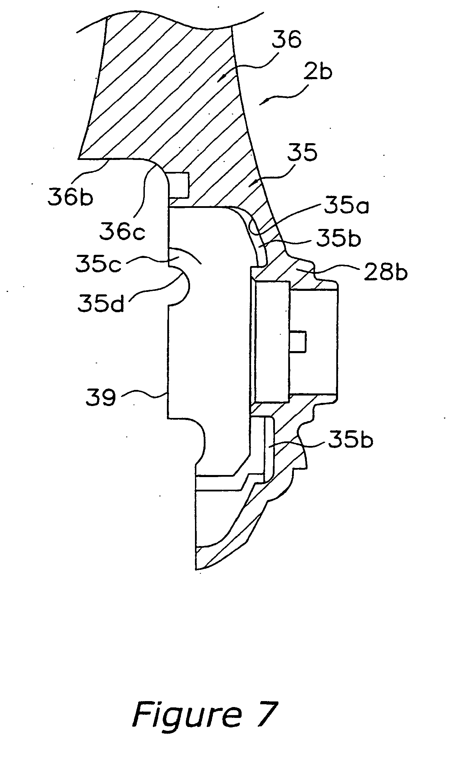

The lid portion 2b is made of, for example, a polyamide-based synthetic resin reinforced by glass fibers, and is manufactured by injection molding. As shown in Figs 3, 4, 6, and 7, the lid portion 2b has a thin-walled cover portion 35 and a mounting leg portion 36. The cover portion 35 is formed unitarily with the second flange portion 24b serving as a wall portion at the rotor such that the cover portion 35 covers the opening 25 of the casing 2a, and that the flange portions 24a and 24b and the cover portion 35 define a space in the interior. The flange portions 24a and 24b also cover a circular hollow of the rotor 3, such that the flange portions can prevent foreign matter such as water or liquids from entering the hollow 3a. The mounting leg portion 36 extends upwardly from the cover portion 35. The upper portion of the cover portion 35 has about the same thickness as the adjacent portion of the case 2a, and the lower portion becomes thinner as the casing 2a bulges toward it. In the upper portion and the rear portion of the cover portion 35 except the front portion, a trimmed portion 39 is formed opposing the opening 25. In the trimmed portion 39, a step is formed so that it is in close contact with the opening 25. At the front of the cover portion 35, a substantially semi-circular second flange portion 24b of the flange portion 2c is formed. An inner side portion of the second flange portion 24b that protrudes inwardly has the function to serve as a wall portion for reinforcing the cover portion 35. On one side of the cover portion 35, a second handle support portion 28b comprising a boss portion for supporting the other end of the handle shaft 10 is formed. From an upper portion of the trimmed portion 39 of the cover portion 35 toward the second handle support 28b, a varied-wall-thickness portion 35a, which is indicated by arrows in Figures 6 and 7, has an arched surface chamfered with a radius of, for example, about 6 mm so that the wall thickness does not change abruptly from the mounting leg portion 36. As a result of this, local stress concentrations can be relaxed, and at the same time, the fluid flow during resin molding is improved, preventing defective moldings. In addition, on the inner side face of the second handle support portion 28b, reinforcing ribs 35b are radially formed.

The mounting leg portion 36 is a solid, thick-walled member, one end of which extends both forward and backward and forms a fishing rod-mounting portion 36a. The boundary portion between the cover portion 35 and the mounting leg portion 36 is cut out at approximately half the thickness, and the upper portion of the casing 2a is inserted into the cut-out portion so that the outer side faces are smoothly connected. In this cut-out portion 36b as well, a connecting portion 36c (Figure 7) connected with the trimmed portion 39 has an arched surface chamfered with a radius of, for example, about 3 mm in order to prevent stress concentration.

The flange portion 2c is formed into a disk-like shape and arranged in substantially the same plane as the edge face of the circular hollow 3a formed in the rear of the rotor 3, thus covering the circular hollow 3. As mentioned previously, the flange portion 2c includes the substantially semi-circular first flange portion 24a, which is formed unitarily with the casing 2a, and the semicircular second flange portion 24b, which is formed unitarily with the cover portion 35 of the lid portion 2b and forms a circle together with the first flange portion 24a. Since these flange portions 24a and 24b are thus formed unitarily with the casing 2a and the cover portion 35, the relative strength of the casing 2a and the cover portion 35 can be maintained at a high degree. At the same time, deformations during the molding can be prevented and a high degree of precision can be maintained.

On the rear surface of the mounting leg portion 36 of the reel unit 2, a name plate 37 is fixed. To a lower portion of the rear surface of the reel unit, a protective cover 38 is mounted.

The name plate 37 is made of a synthetic resin and is mounted to a long groove 36d (Figure 2) formed on the mounting leg portion 36. The name plate 37 has a body portion 37a arranged along the rear surface of the mounting leg portion 36, three protruding portions 37b formed unitarily with the body portion 37a and mounted to the long groove 36d, and an interlocking tongue 37c formed at the lower end of the body portion 37a and interlocking at an upper portion of the casing 2a. The interlocking tongue 37c is fastened between the casing 2a and the cover portion 35 so that it can reliably prevent the name plate from coming off.

The protective cover 38 is, for example, made of a synthetic resin, such as ABS resin, that is metal-treated, or made of a stainless alloy so that it cannot be easily damaged, and it is for protecting the portion of the reel unit 2 that is most susceptible to damage.

As shown in Figure 2, the rotor drive mechanism 5 includes a master gear 11 that is a face gear rotating with the handle shaft 10 to which the handle 1 is fixed, and a pinion gear 12 that meshes with the master gear 11. The pinion gear 12 that is the rotation shaft of the rotor 3 is tubular, its front 12a penetrates the center of the rotor 3 and is fixed to the rotor 3 by a nut 13. The pinion gear 12 is rotatably supported by the reel unit 2 at its mid-portion and rear end respectively by a bearing 14a mounted to the rotation support portion 27 and a bearing 14b arranged further rearward.

The oscillating mechanism 6 is a device that causes a spool shaft 15, coupled via a drag mechanism 60 to the spool 4 through its center, to reciprocate, which pumps the spool 4 in the same direction. The oscillating mechanism 6 has: a worm shaft 21 disposed below and parallel to the spool shaft 15; a slider 22 that travels back and forth along the worm shaft 21; and an intermediate gear 23 fixed to the front end of the worm shaft 21. The rear end of the spool shaft 15 is fixed non-rotatably to the slider 22. The rear end of the spool shaft 15 is non-rotatably fixed to the slider 22. The intermediate gear 23 meshes with the pinion gear 12 via a braking mechanism, which is not shown in the drawings. Thus, the speed with which the oscillating mechanism 6 shifts back and forth is slowed down, and the fishing line can be packed densely onto the spool 4.

The first and the second handle support portions 28a and 28b are cylindrical portions that are provided in the casing 2a and in which a bearing, which is not shown in the figures, is mounted.

As shown in Figure 2, the rotor 3 includes a cylindrical portion 30, and first and second rotor arms 31 and 32 opposing each other provided on the sides of the cylindrical portion 30. The cylindrical portion 30 and the two rotor arms 31 and 32 are formed unitarily.

A front wall 33 is provided at the front portion of the cylindrical portion 30, and a boss portion 33a is formed in the middle of the front wall 33. The front portion 12a of the pinion gear 12 and the spool shaft 15 pass through a through-hole of the boss portion 33a. A nut 13 is arranged at the front portion of the front wall 33, and the nut 13 is screwed into a thread portion at the front end of the pinion gear 12. In the cylindrical portion 30, the portion rearward from the front wall 33 is a hollow 3a, and the flange portion 2c is formed unitarily with the casing 2a and the lid portion 2b, flush with the rear end face of the hollow 3a.

A first bail-support member 40 is fitted pivotably onto the outer peripheral side of the front end of the first rotor arm 31. A line roller 41 for guiding fishing line onto the spool 4 is fitted to the front end of the first bail-support member 40. A second bail-support member 42 is fitted pivotally onto the outer peripheral side of the front end of the second rotor arm 32. A bail 43 is provided between the line roller 41 at the front end of the first bail-support member 40 and the second bail-support member 42. These first and second bail-support members 40 and 42, the line roller 41, and the bail 43 together form a bail arm 44.

A reverse rotation prevention mechanism 50 for prohibiting/releasing reversal of the rotor 3 is disposed within the cylindrical portion 30 of the rotor 3. The reverse rotation prevention mechanism 50 has a roller-type one-way clutch 51, and an operation mechanism 52 for switching the one-way clutch 51 between an operational state and a non-operational state. The outer race of the one-way clutch 51 is fixed to the rotation support portion 27, and the inner race thereof is non-rotatably interlocked with the pinion gear 12. The operation mechanism 52 has an operation lever 53 disposed between the casing 2a and the lid portion 2b, and an operation shaft 54 provided with the operation lever 53 at its rear end and mounted pivotably to the casing 2a. The operation mechanism 52 can switch the one-way clutch 51 between the operational state and the non-operational state by pivoting the operation lever 53 and thereby pivoting a cam protrusion (not shown in the figures) at the front end of the operation shaft 54. When the one-way clutch 51 is in the operational state, reverse rotation of the rotor 3 is impossible, whereas when in the non-operational state, reverse rotation of the rotor 3 is possible.

The spool 4 is arranged between the first rotor arm 31 and the second rotor arm 32 of the rotor 3, and is mounted to the front end of the spool shaft 15 with the drag mechanism 60 interposed between the spool shaft 15 and the spool 4. The spool 4 has a bobbin trunk portion 4a onto which fishing line is wound, a skirt portion 4b that is formed unitarily on the rear of the bobbin trunk portion 4a, and a front flange portion 4c fixed to the front end of the bobbin trunk portion 4a.

In the spinning reel thus configured, the lid portion 2b, in which the thick-walled mounting leg portion 36 is formed unitarily with the cover portion 35, is provided separately from the thin-walled casing 2a for accommodating various drive portions. Therefore, a high degree of precision for the casing 2a can be maintained, and a high degree of strength of the mounting leg portion 36 can also be maintained. In addition, the mounting leg portion 36 is formed unitarily with the cover portion 35, and therefore, the relative strength can be maintained with a simpler structure than if they are separately provided. Moreover, the first flange portion 24b, serving as a wall portion, is formed unitarily with the cover portion 35. Therefore, the entire cover portion has a box-like shape enclosing a space therein. Consequently, stress is distributed, and the relative strength of the cover portion is increased. Furthermore, because stress is distributed, deformations during the molding do not occur easily, and a high degree of precision can be maintained. For these reasons, even when the lid portion 2b including the cover portion 35 is made of a synthetic resin or the like, which has a low relative strength, a high degree of precision and relative strength can be maintained. In addition, since the lid portion 2b including the cover portion 35 is made of a synthetic resin, weight reduction can be achieved at low cost.

### Second Embodiment

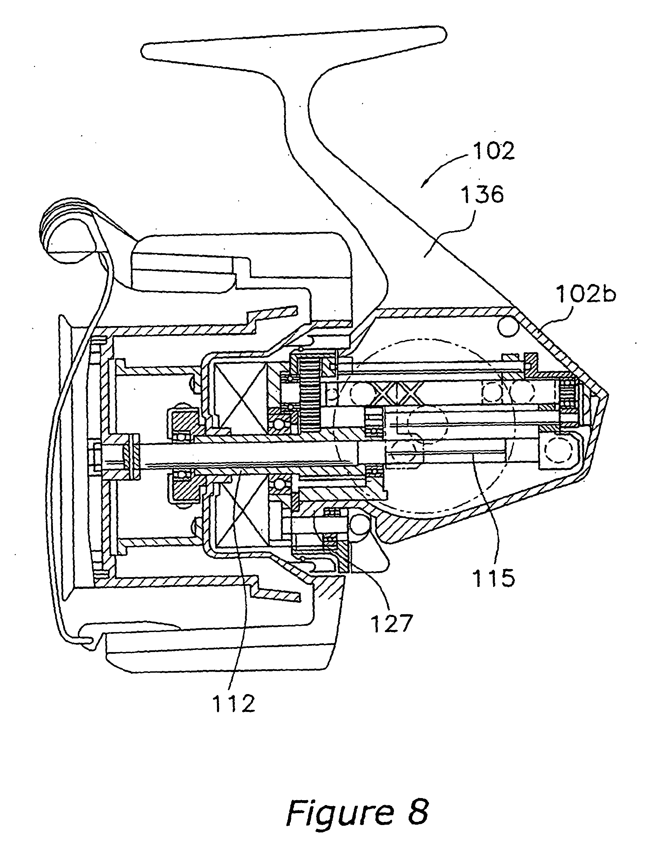

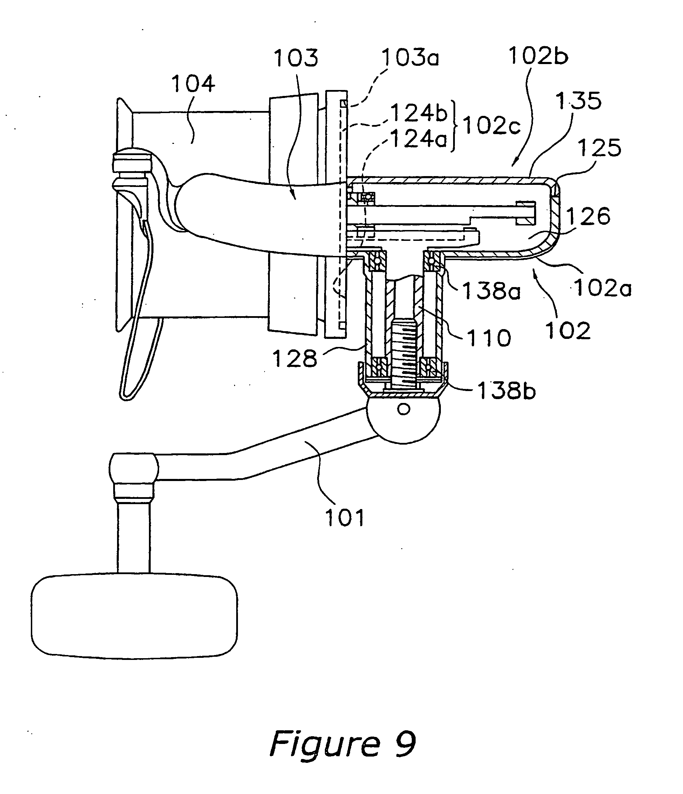

In the first embodiment, the handle shaft 10 is supported by the casing 2a and the lid portion 2b, but as shown in Figures 8 and 9, it is also possible to support a handle shaft 110 by only the casing 102a.

As seen from Figures 8 and 9, the spinning reel principally includes a reel unit 102 to which the handle 101 is rotatably mounted, a rotor 103, and a spool 104.

The reel unit 102 principally has a casing 102a for supporting the rotor 103 and the spool 104, the lid portion 102b detachably screwed to the casing 102a, and a circular flange portion 102c including first and second flange portions 124a and 124b respectively formed unitarily with the casing 102a and the lid portion 102b.

The casing 2a is a thin-walled member made of, for example, an aluminum alloy. The casing 2a has an opening 125 formed at its side, a mechanism accommodating space 126 formed inside, a rotation support portion 127 that is formed so as to be arranged inside the circular hollow 103a formed at the reel unit 102 side of the rotor 103 and rotatably supports the rotation shaft (pinion gear 112) of the rotor 103, and a handle support portion 128 comprising a boss portion for supporting the handle shaft 110 that is the rotation shaft of the handle 101. To the handle support portion 128, two bearings 138a and 138b are mounted at a certain spacing, and the handle shaft 110 is supported by only the casing 102a.

The lid portion 102b is made of, for example, an aluminum alloy. The lid portion 102b has a thin-walled cover portion 135 for covering the opening 125 of the casing 102a, and a mounting leg portion 136 extending upward from the cover portion 135. The second flange portion 124b of the flange portion 102c is formed unitarily with the front portion of the cover portion 135.

Except that the spool 104 is non-rotatably mounted to the spool shaft 115, the configuration of the spinning reel is substantially the same as that in the first embodiment, and is therefore not further elaborated upon.

Also with the reel unit 102 thus configured, in the cover portion 135, the second flange portion 124b is formed unitarily with the cover portion 135 in addition to the portion covering the opening 125. Therefore, the entire cover portion 135 has a box-like shape enclosing a space therein. Consequently, stress is distributed, and the relative strength of the cover portion 135 is increased. Furthermore, because stress is distributed, deformations during the molding do not occur easily, and a high degree of precision can be maintained. For these reasons, even when the lid portion 102b including the cover portion 135 is made of an aluminum alloy or the like, which has a low relative strength, a high degree of precision and relative strength can be maintained. In addition, since the lid portion 102b including the cover portion 35 is made of alight weight metal such as an aluminum alloy, weight reduction can be achieved at low cost.

### Other embodiments

(a) Types of spinning reels are not limited to the foregoing embodiments. The present invention can be suitably applied to spinning reels having a drag mechanism or a braking mechanism having a brake lever instead of the reverse rotation prevention mechanism.
(b) The shapes of the mounting leg portion and the cover portion are not limited to the foregoing embodiments.
(c) The foregoing embodiments have described for the case that the first flange portion 24a and the second flange portion 24b are formed unitarily with the casing 2a and the cover portion 35, but as long as the wall portion that is the inner portion protruding inward of the second flange portion 24b is formed unitarily with the cover portion 35, other portions may be formed separately.

According to the present invention, in the cover portion, a wall portion is formed unitarily therewith at the side to which the rotor is to be mounted, in addition to the portion that covers the opening, and therefore, the entire cover portion has a box-like shape enclosing a space therein. Thus, stress is distributed and the relative strength of the cover portion is increased. Moreover, because stress is distributed, deformations do not occur easily during the molding, and a high degree of precision can be maintained. Consequently, even when the lid portion including the cover portion is made of a synthetic resin or an aluminum alloy, which has a low relative strength, it is possible to maintain a high degree of precision and relative strength. In addition, if the lid portion including the cover portion is made of an aluminum alloy or a synthetic resin, weight reduction can be achieved at low cost.

As used herein, the following directional terms "forward," "rearward," "above," "downward," "vertical," "horizontal," "below" and "transverse" as well as any other similar directional terms refer to those directions of a device equipped with the present invention. Accordingly, these terms, as utilized to describe the present invention should be interpreted relative to a device equipped with the present invention.

The terms of degree such as "substantially," "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

## Claims

1. A reel unit (2,102) for a spinning reel that is mounted to a fishing rod and has a rotor (3,103) that rotates in cooperation with rotation of a handle (1,101) for winding fishing line onto a spool (4,104), said reel unit comprising:
a casing (2a,102a) forming a mechanism accommodating space (26,126) inside, said casing including an opening (25,125) formed at its side and a rotation support portion (27,127) for supporting a rotation shaft of the rotor, said rotation support portion being adapted to be arranged inside a circular hollow (3a,103a) formed at a reel unit side of the rotor;
a lid portion (2b,102b) having a cover portion (35,135) and a mounting leg portion (36,136), said cover portion being detachably fixed to said casing to cover said opening of said casing, said mounting leg portion extending from said cover portion and having a front end to which the fishing rod can be attached; and
a wall portion formed unitarily with said lid portion on a rotor side of said lid portion such that said wall portion and said lid portion define a space inside.

2. The reel unit for a spinning reel as set forth in Claim 1, further comprising
a substantially circular flange portion having a first flange portion (24a,124a) and a second flange portion (24b,124b), said first flange portion being arranged on substantially the same plane as the end face of the hollow (3a,103a) and adjacent to said casing (2a,102a), said second flange portion being provided with said wall portion such that said first and second flange portions cover the hollow.

3. The reel unit for a spinning reel as set forth in Claim 2, wherein
said second flange portion (24b,124b) is formed unitarily with said wall portion.

4. The reel unit for a spinning reel as set forth in Claim 2 or Claim 3, wherein
said first flange portion (24a,124a) is formed unitarily with said casing (2a,102a).

5. The reel unit for a spinning reel as set forth in any preceding Claim, wherein
said casing and said lid portion are made of a synthetic resin.

6. The reel unit for a spinning reel as set forth in any of Claims 1 to 4, wherein
said casing and said lid portion are made of a light weight metal.

7. The reel unit for a spinning reel as set forth in any of Claims 2 to 6, wherein
said cover portion (35,135) has a trimmed portion (39) formed continuously with said second flange portion (24b, 124b) and formed on a circutnference opposing said opening (25,125) of said casing (2a,102a).

8. The reel unit for a spinning reel as set forth in any preceding Claim, wherein
said lid portion (2b,102b) has a handle support portion (128) for supporting the handle (1,101).

9. The reel unit for a spinning reel as set forth in Claim 8, wherein
said casing (2a,102a) has a handle support portion (128) for supporting the handle (1,101).

10. The reel unit for a spinning reel as set forth in Claim 8 or Claim 9, wherein
said cover portion (35,135) further includes reinforcing ribs that are formed on an inner side of said handle support portion.

11. A spinning reel adapted to be mounted to a fishing rod, comprising:
a handle (1,101);
a reel unit (2,102) according to any preceding Claim rotatably supporting said handle;
a rotor (3,103) rotatably supported at a front of said reel unit and having the circular hollow (3a,103a) on a reel unit side; and
a spool (4,104) disposed at a front of said rotor so as to be shiftable back and forth.

## Patentansprüche

1. Eine Rolleneinheit (2, 102) für eine Spinnrolle, die an einer Angelrute montiert ist und einen Rotor (3, 103) aufweist, der sich in Zusammenwirkung mit der Drehung eines Drehknopfs (1, 101) zum Wickeln einer Angelschnur auf eine Spule (4,104) dreht, wobei die Rolleneinheit Folgendes beinhaltet:
ein Gehäuse (2a, 102a), das innen einen Mechanismusunterbringungsraum (26, 126) bildet, wobei das Gehäuse eine an seiner Seite gebildete Öffnung (25, 125) und einen Drehstützabschnitt (27, 127) zum Stützen einer Drehwelle des Rotors umfasst, wobei der Drehstützabschnitt angepasst ist, um innen in einem kreisförmigen Hohlraum (3a, 103a), der an einer Rolleneinheitsseite des Rotors gebildet ist, platziert zu sein;
einen Deckelabschnitt (2b, 102b), der einen Abdeckungsabschnitt (35, 135) und einen Montierungsschenkelabschnitt (36, 136) aufweist, wobei der Abdeckungsabschnitt an dem Gehäuse zum Abdecken der Öffnung des Gehäuses abnehmbar befestigt ist und wobei sich der Montierungsschenkelabschnitt von dem Abdeckungsabschnitt erstreckt und ein vorderes Ende, an dem die Angelrute angebracht werden kann, aufweist; und
einen Wandabschnitt, der mit dem Deckelabschnitt auf einer Rotorseite des Deckelabschnitts einheitlich gebildet ist, so dass der Wandabschnitt und der Deckelabschnitt innen einen Raum definieren.

2. Rolleneinheit für eine Spinnrolle gemäß Anspruch 1, die ferner Folgendes beinhaltet:
einen im Wesentlichen kreisförmigen Flanschabschnitt, der einen ersten Flanschabschnitt (24a, 124a) und einen zweiten Flanschabschnitt (24b, 124b) aufweist, wobei der erste Flanschabschnitt auf der im Wesentlichen gleichen Ebene wie die Endfläche des Hohlraums (3a, 103a) und anliegend an das Gehäuse (2a, 102a) platziert ist und der zweite Flanschabschnitt so mit dem Wandabschnitt bereitgestellt ist, dass der erste und der zweite Flanschabschnitt den Hohlraum abdecken.

3. Rolleneinheit für eine Spinnrolle gemäß Anspruch 2, wobei
der zweite Flanschabschnitt (24b, 124b) einheitlich mit dem Wandabschnitt gebildet ist.

4. Rolleneinheit für eine Spinnrolle gemäß Anspruch 2 oder Anspruch 3, wobei
der erste Flanschabschnitt (24a, 124a) einheitlich mit dem Gehäuse (2a, 102a) gebildet ist.

5. Rolleneinheit für eine Spinnrolle gemäß einem der vorhergehenden Ansprüche, wobei
das Gehäuse und der Deckelabschnitt aus einem Kunstharz hergestellt sind.

6. Rolleneinheit für eine Spinnrolle gemäß einem der Ansprüche 1 bis 4, wobei
das Gehäuse und der Deckelabschnitt aus einem Leichtmetall hergestellt sind.

7. Rolleneinheit für eine Spinnrolle gemäß einem der Ansprüche 2 bis 6, wobei
der Abdeckungsabschnitt (35,135) einen beschnittenen Abschnitt (39) aufweist, der mit dem zweiten Flanschabschnitt (24b, 124b) kontinuierlich gebildet ist und auf einem Umfang, der der Öffnung (25, 125) des Gehäuses (2a, 102a) gegenübersteht, gebildet ist.

8. Rolleneinheit für eine Spinnrolle gemäß einem der vorhergehenden Ansprüche, wobei
der Deckelabschnitt (2b, 102b) einen Drehknopfstützabschnitt (128) zum Stützen des Drehknopfs (1, 101) aufweist.

9. Rolleneinheit für eine Spinnrolle gemäß Anspruch 8, wobei
das Gehäuse (2a, 102a) einen Drehknopfstützabschnitt (128) zum Stützen des Drehknopfs (1, 101) aufweist.

10. Rolleneinheit für eine Spinnrolle gemäß Anspruch 8 oder Anspruch 9, wobei
der Abdeckungsabschnitt (35, 135) ferner Versteifungsrippen umfasst, die auf einer Innenseite des Drehknopfstützabschnitts gebildet sind.

11. Eine Spinnrolle, die angepasst ist, um an einer Angelrute montiert zu werden, die Folgendes beinhaltet:
einen Drehknopf (1, 101);
eine Rolleneinheit (2, 102) gemäß einem der vorhergehenden Ansprüche, die den Drehknopf drehbar stützt;
einen Rotor (3,103), der an einer Vorderseite der Rolleneinheit drehbar gestützt ist und auf einer Rolleneinheitsseite den kreisförmigen Hohlraum (3a, 103a) aufweist; und
eine Spule (4,104), die an einer Vorderseite des Rotors so angeordnet ist, dass sie hin- und herverschoben werden kann.

## Revendications

1. Une unité formant moulinet (2, 102) destinée à un moulinet à tambour qui est monté sur une canne à pêche et a un rotor (3, 103) qui tourne en coopération avec la rotation d'une poignée (1, 101) pour enrouler de la ligne de pêche sur une bobine (4, 104), ladite unité formant moulinet comportant :
un boîtier (2a, 102a) formant un espace accueillant un mécanisme (26, 126) à l'intérieur, ledit boîtier comprenant une ouverture (25, 125) formée au niveau de son côté et une portion de support de rotation (27, 127) pour soutenir un arbre de rotation du rotor, ladite portion de support de rotation étant adaptée pour être agencée à l'intérieur d'un creux circulaire (3a, 103a) formé au niveau d'un côté d'unité formant moulinet du rotor ;
une portion formant couvercle (2b, 102b) ayant une portion formant couverture (35, 135) et une portion formant patte de montage (36, 136), ladite portion formant couverture étant fixée de façon amovible audit boîtier pour recouvrir ladite ouverture dudit boîtier, ladite portion formant patte de montage s'étendant à partir de ladite portion formant couverture et ayant une extrémité avant sur laquelle la canne à pêche peut être attachée ; et
une portion formant paroi formée de façon solidaire à ladite portion formant couvercle sur un côté de rotor de ladite portion formant couvercle de telle sorte que ladite portion formant paroi et ladite portion formant couvercle définissent un espace à l'intérieur.

2. L'unité formant moulinet destinée à un moulinet à tambour tel qu'exposé dans la revendication 1, comportant de plus une portion formant flasque substantiellement circulaire ayant une première portion formant flasque (24a, 124a) et une deuxième portion formant flasque (24b, 124b), ladite première portion formant flasque étant agencée sur substantiellement le même plan que la face d'extrémité du creux (3a, 103a) et adjacente audit boîtier (2a, 102a), ladite deuxième portion formant flasque étant munie de ladite portion formant paroi de telle sorte que lesdites première et deuxième portions formant flasque recouvrent le creux.

3. L'unité formant moulinet destinée à un moulinet à tambour tel qu'exposé dans la revendication 2, dans laquelle
ladite deuxième portion formant flasque (24b, 124b) est formée de façon solidaire à ladite portion formant paroi.

4. L'unité formant moulinet destinée à un moulinet à tambour tel qu'exposé dans la revendication 2 ou la revendication 3, dans laquelle
ladite première portion formant flasque (24a, 124a) est formée de façon solidaire audit boîtier (2a, 102a).

5. L'unité formant moulinet destinée à un moulinet à tambour tel qu'exposé dans n'importe quelle revendication précédente, dans laquelle
ledit boîtier et ladite portion formant couvercle sont faits en une résine synthétique.

6. L'unité formant moulinet destinée à un moulinet à tambour tel qu'exposé dans n'importe lesquelles des revendications 1 à 4, dans laquelle
ledit boîtier et ladite portion formant couvercle sont faits en un métal léger.

7. L'unité formant moulinet destinée à un moulinet à tambour tel qu'exposé dans n'importe lesquelles des revendications 2 à 6, dans laquelle
ladite portion formant couverture (35, 135) a une portion rognée (39) formée de façon continue à ladite deuxième portion formant flasque (24b, 124b) et formée sur une circonférence à l'opposé de ladite ouverture (25, 125) dudit boîtier (2a, 102a).

8. L'unité formant moulinet destinée à un moulinet à tambour tel qu'exposé dans n'importe quelle revendication précédente, dans laquelle
ladite portion formant couvercle (2b, 102b) a une portion de support de poignée (128) destinée à soutenir la poignée (1, 101).

9. L'unité formant moulinet destinée à un moulinet à tambour tel qu'exposé dans la revendication 8, dans laquelle
ledit boîtier (2a, 102a) a une portion de support de poignée (128) destinée à soutenir la poignée (1, 101).

10. L'unité formant moulinet destinée à un moulinet à tambour tel qu'exposé dans la revendication 8 ou la revendication 9, dans laquelle
ladite portion formant couverture (35, 135) comprend de plus des nervures de renforcement qui sont formées sur un côté interne de ladite portion de support de poignée.

11. Un moulinet à tambour adapté pour être monté sur une canne à pêche, comportant :
une poignée (1, 101) ;
une unité formant moulinet (2, 102) selon n'importe quelle revendication précédente soutenant ladite poignée de façon à ce qu'elle puisse tourner ;
un rotor (3, 103) soutenu de façon à pouvoir tourner au niveau d'un avant de ladite unité formant moulinet et dont le creux circulaire (3a, 103a) se trouve sur un côté d'unité formant moulinet ; et
une bobine (4, 104) disposée au niveau d'un avant dudit rotor de façon à pouvoir être décalée d'avant en arrière et d'arrière en avant.
